# EUROPEAN PATENT APPLICATION

(11) **EP 4 800 775 A1**
(43) Date of publication of application: **02.09.2026**
(21) Application number: 24882725.5
(22) Date of filing: 15.10.2024
(51) Int. Cl.: H01M 4/587, C01B 32/21, H01M 4/133, H01M 10/052, H01M 4/02

(54) **ANODE ACTIVE MATERIL FOR LITHIUM SECONDARY BATTERY, METHOD FOR PREPARING SAME, AND LITHIUM SECONDARY BATTERY COMPRISING SAME**

(30) Priority: 27.10.2023 KR 20230145574
(71) Applicant: Posco Future M Co., Ltd., Pohang-si, Gyeongsangbuk-do 37918 (KR)
(72) Inventor: KWON, Haejun, Pohang-si, Gyeongsangbuk-do 37918 (KR); KANG, Suhee, Pohang-si, Gyeongsangbuk-do 37918 (KR); AHN, Ki Hong, Pohang-si, Gyeongsangbuk-do 37918 (KR); LEE, Kyoung Muk, Pohang-si, Gyeongsangbuk-do 37918 (KR); SHIN, Myoungsoo, Pohang-si, Gyeongsangbuk-do 37918 (KR); LEE, Se Hyun, Pohang-si, Gyeongsangbuk-do 37918 (KR); JUNG, Su Yeon, Pohang-si, Gyeongsangbuk-do 37918 (KR); KIM, Sumin, Pohang-si, Gyeongsangbuk-do 37918 (KR); CHOI, Hosun, Pohang-si, Gyeongsangbuk-do 37918 (KR)
(74) Representative: Pfenning, Meinig & Partner mbB
(86) International application number: PCT/KR2024/015630
(87) International publication number: WO 2025/089698

(57) **Abstract**

The present invention relates to a negative electrode active material for a lithium secondary battery comprising natural graphite, wherein the natural graphite has a degree of sphericity of 0.91 or more, and the natural graphite has a pellet density of 1.70 g/cc or more when a pressure of 800 kgf/cm² is applied.

## Description

### [TECHNICAL FIELD]

The present invention relates to a negative electrode active material for a lithium secondary battery, a method of preparing the same, and a lithium secondary battery including the same, and more specifically, to a negative electrode active material for a lithium secondary battery comprising natural graphite, a method of preparing the same, and a lithium secondary battery including the same.

### [BACKGROUND ART]

As prices of energy sources rise due to the depletion of fossil fuels and interest in environmental pollution amplifies, eco-friendly alternative energy sources are becoming an indispensable factor for future life.

In particular, as technology development and demand for mobile devices increase, demand for secondary batteries as energy sources is rapidly increasing, and recently, the use of secondary batteries as power sources for electric vehicles (xEV) and energy storage systems (ESS) has been realized.

Conventionally, lithium metal was used as the negative electrode of the secondary battery; however, as battery short circuits due to dendrite formation and the resulting risk of explosion became problematic, the use of carbon-based active materials capable of reversible intercalation and deintercalation of lithium ions and maintaining structural and electrical properties has emerged.

As the carbon-based active materials, various types of carbon-based materials such as artificial graphite, natural graphite, and hard carbon have been applied. Among them, graphite-based active materials capable of ensuring lifespan characteristics of lithium secondary batteries due to excellent reversibility are most widely used. Since the graphite-based active material has a low discharge voltage of -0.2 V relative to lithium, a battery using the graphite-based active material can exhibit a high discharge voltage of 3.6 V, thereby providing many advantages in terms of energy density of the lithium battery.

Among these, particularly, natural graphite exhibits higher output and capacity compared to other carbon-based active materials such as artificial graphite, and has excellent adhesion, so it has the advantage of reducing the amount of binder used and implementing a high-capacity, high-density negative electrode.

In particular, lithium secondary batteries used in electric vehicles require lifespan characteristics in which discharge capacity is well maintained as charging and discharging are repeated.

### [DETAILED DESCRIPTION OF THE INVENTION]

### [TECHNICAL PROBLEM]

One object of the present invention is to provide a negative electrode active material for a lithium secondary battery having improved lifespan characteristics, a method of preparing the same, and a lithium secondary battery including the same.

### [TECHNICAL SOLUTION]

One embodiment of the present invention provides a negative electrode active material for a lithium secondary battery comprising natural graphite, wherein the natural graphite has a degree of sphericity of 0.91 or more, and the natural graphite has a pellet density of 1.70 g/cc or more when a pressure of 800 kgf/cm² is applied.

The natural graphite may have an orientation peak intensity ratio (I(110)/I(004)) of 0.51 or more in XRD pattern analysis.

The natural graphite may have an average Raman peak intensity ratio (I_{D}/I_{G}) of 0.30 or less.

The natural graphite may have an oil absorption amount of 42 to 46 mL/100g.

The natural graphite may have a BET specific surface area of 5.0 m²/g or more.

The natural graphite may be oxidation-treated.

The negative electrode active material may not include a coating layer disposed on the natural graphite.

The average particle diameter (D50) of the natural graphite may be 10 to 20 µm.

Another embodiment of the present invention provides a method of preparing a negative electrode active material for a lithium secondary battery, comprising: preparing a natural graphite powder; performing high-density spheronization on the natural graphite powder; and performing an oxidation treatment on the high-density spheronized natural graphite powder.

The oxidation treatment may be performed at a temperature of 500 to 700°C.

The oxidation treatment may be performed for 1 to 5 hours.

The oxidation treatment may be performed in an air or oxygen (O₂) atmosphere.

Another embodiment of the present invention provides a negative electrode for a lithium secondary battery comprising the aforementioned negative electrode active material.

Another embodiment of the present invention provides a lithium secondary battery comprising the negative electrode for a lithium secondary battery.

### [ADVANTAGEOUS EFFECTS]

The negative electrode active material for a lithium secondary battery according to one embodiment of the present invention can improve the lifespan characteristics of a battery.

### [BRIEF DESCRIPTION OF DRAWINGS]

FIG. 1 is a graph showing pellet density according to applied pressure applied to negative electrode active materials prepared according to Example 1 and Comparative Examples 1 to 4.
FIG. 2 is a graph showing the measurement results of Raman peak intensity ratio (I subscript D / I subscript G) of negative electrode active materials prepared according to Example 1 and Comparative Examples 1 to 4.
FIG. 3 is a SEM image of a negative electrode active material prepared according to Example 1.
FIG. 4 is a SEM image of a negative electrode active material prepared according to Comparative Example 1.
FIG. 5 is a SEM image of a negative electrode active material prepared according to Comparative Example 2.
FIG. 6 is a SEM image of a negative electrode active material prepared according to Comparative Example 3.
FIG. 7 is a SEM image of a negative electrode active material prepared according to Comparative Example 4.

### [MODE FOR CARRYING OUT THE INVENTION]

Terms such as first, second, and third are used to describe various parts, components, regions, layers, and/or sections, but are not limited thereto. These terms are only used to distinguish one part, component, region, layer, or section from another part, component, region, layer, or section. Therefore, a first part, component, region, layer, or section described below may be referred to as a second part, component, region, layer, or section without departing from the scope of the present invention.

The terminology used herein is for the purpose of describing particular embodiments only and is not intended to be limiting of the present invention. As used herein, the singular forms are intended to include the plural forms as well, unless the context clearly indicates otherwise. It will be further understood that the terms "comprises" when used in this specification, specify the presence of stated features, regions, integers, steps, operations, elements, and/or components, but do not preclude the presence or addition of other features, regions, integers, steps, operations, elements, and/or components.

When a part is referred to as being "on" or "above" another part, it may be directly on or above the other part, or intervening parts may be present. In contrast, when a part is referred to as being "directly on" another part, there are no intervening parts present.

Unless otherwise defined, all terms including technical and scientific terms used herein have the same meaning as commonly understood by one of ordinary skill in the art to which this invention belongs. Terms defined in commonly used dictionaries are to be interpreted as having a meaning consistent with the related technical literature and the presently disclosed content, and are not to be interpreted in an idealized or overly formal sense unless defined otherwise.

Also, unless otherwise specified, % means % by weight, and 1 ppm is 0.0001% by weight.

In the present specification, the term "combination(s) thereof" described in a Markush-type expression means a mixture or combination of one or more selected from the group consisting of the components described in the Markush-type expression, and means including any one or more selected from the group consisting of the components.

Hereinafter, embodiments of the present invention will be described in detail so that those of ordinary skill in the art to which the present invention pertains can easily practice the invention. However, the present invention may be embodied in many different forms and is not limited to the embodiments described herein.

### 1. Negative Electrode Active Material

The negative electrode active material for a lithium secondary battery according to one embodiment of the present invention includes natural graphite.

At this time, the natural graphite has a degree of sphericity of 0.91 or more. As the degree of sphericity of the natural graphite satisfies the above range, the density and orientation of the natural graphite particles increase together, and the adhesion between current collectors is improved, thereby enabling the realization of high energy electrode density according to the improvement of electrode density, and improving the output characteristics of the battery.

In the present specification, the degree of sphericity refers to a numerical value indicating the degree to which a particle is close to a sphere, and refers to a value obtained by dividing the circumference of a circle having the same area as the particle projection shape by the actual circumference of the particle projection shape through a flow-type particle analysis device. This degree of sphericity can be measured using an analyzer (Fluid Imaging Technologies, Flowcam 8100) and analysis S/W (visual spreadsheet) for obtaining optical images.

The implementation of the sphericity of the natural graphite can be more easily obtained through a high-density spheronization process for the natural graphite raw material powder in the manufacturing method, which will be described in more detail in the method of preparing a negative electrode active material described later.

However, when the high-density spheronization process for implementing the sphericity is performed, there is a problem in that structural stability is impaired due to damage to the surface of the natural graphite and collapse of the surface structure, thereby deteriorating the lifespan characteristics of the battery.

Accordingly, the present inventors have conducted repeated studies to solve the deterioration of structural stability caused by the collapse of the surface structure, and as a result, have found that structural stability can be improved through oxidation treatment on natural graphite, and accordingly, lifespan characteristics are improved. The oxidation treatment method will be described in more detail in the method of preparing a negative electrode active material described later.

In addition, the present inventors have found that when natural graphite is subjected to oxidation treatment for surface structure stabilization, various physical properties of natural graphite are obtained in specific ranges as follows, which will be described below.

First, the natural graphite according to the present invention may have a pellet density of 1.70 g/cc or more, and more specifically 1.74 g/cc or 1.77 g/cc or more, when a pressure of 800 kgf/cm² is applied. The pellet density upon application of a predetermined pressure to natural graphite may mean the softness of the natural graphite. More specifically, when natural graphite powder is oxidized, carbon atoms on the surface of natural graphite react with oxygen to form carbon dioxide, and some of the planes constituting the layer structure of natural graphite may be decomposed. Accordingly, compared to natural graphite before oxidation treatment, which has a structure in which planes constituting the layer structure of natural graphite are densely stacked, natural graphite after oxidation treatment, in which some layer structures are decomposed, may have weakened rigidity and increased softness.

In the present specification, "pellet density" may refer to the density of the active material powder measured when a specific mass of the active material powder sample is put into a cylinder having a specific area and then pressure is applied by applying a load in the height direction.

In addition, the natural graphite according to the present invention may have an orientation peak intensity ratio (I(110)/I(004)) of 0.51 or more, and more specifically 0.53 or 0.55 or more, in XRD pattern analysis. As the orientation peak intensity ratio (I(110)/I(004)) of natural graphite satisfies the above range, the directionality of the graphite layer edge portion in the graphite particle can be diversified, so that the movement of lithium ions can be made smoother, and accordingly, the lifespan characteristics of the battery can be further improved.

In the present specification, the orientation peak intensity ratio (I(110)/I(004)) refers to a value obtained by measuring the (110) plane and the (004) plane of graphite particles by XRD and dividing the peak intensity of the (110) plane and the (004) plane. At this time, specifically, the (110) plane represents the range of 76.5 degrees < 2θ < 78.5 degrees, and the (004) plane represents the range of 53.5 < 2θ < 56.0 degrees, where 2θ represents the diffraction angle.

The orientation peak intensity ratio in the above range can be more easily obtained through a high-density spheronization process and an oxidation treatment process for natural graphite in the manufacturing method as described later.

In addition, the natural graphite according to the present invention may have an average Raman peak intensity ratio (I_{D}/I_{G}) of 0.3 or less, and more specifically 0.2, 0.15, or 0.10 or less.

In the present specification, the "average Raman peak intensity ratio (I_{D}/I_{G})" is defined as the average value of the ratio of the maximum peak intensity of the D band at 1360 ± 50 cm⁻¹ to the maximum peak intensity of the G band at 1580 ± 50 cm⁻¹ obtained by Raman spectroscopy.

More specifically, the D band at 1360 ± 50 cm⁻¹ indicates the presence of carbon particles and the characteristics of incomplete and disordered walls, and the G band at 1580 ± 50 cm⁻¹ indicates the continuous form of carbon-carbon bonds (C-C), which indicates the characteristics of the crystalline layer of graphite.

The degree of disorder or defect of the carbon material can be evaluated by this Raman peak intensity ratio (I_{D}/I_{G}). If this ratio is high, it can be evaluated that the carbon material has many disorders or defects, and if this ratio is low, it can be evaluated that the carbon material has few disorders or defects and high crystallinity. The defect referred to herein may mean an imperfect part of the carbon material arrangement caused by the intrusion of unnecessary atoms as impurities into carbon-carbon bonds constituting the carbon material, lack of necessary carbon atoms, occurrence of misalignment, etc., for example, a lattice defect. That is, it can be said that the smaller the average Raman peak intensity ratio, the greater the degree of crystallinity of the carbon material.

As the average Raman peak intensity ratio (I_{D}/I_{G}) of the natural graphite according to the present invention satisfies the above range, structural stability is improved due to the maximization of crystallinity of natural graphite, so that the lifespan characteristics of the battery can be more preferably implemented.

The average Raman peak intensity ratio (I_{D}/I_{G}) in the above range can be more easily obtained through a high-density spheronization process and an oxidation treatment process for natural graphite in the manufacturing method as described later.

In addition, the natural graphite according to the present invention may have an oil absorption amount of 42 to 46 mL/g, and more specifically 43 to 45 mL/g. If the oil absorption amount is too small, the reaction area of graphite decreases, and the lifespan characteristics of the battery may deteriorate. If the oil absorption amount is too large, the reaction area of graphite becomes unnecessarily large, and binder distribution becomes non-uniform, which may deteriorate the lifespan characteristics of the battery. In the present specification, the oil absorption amount of natural graphite can be calculated by measuring the viscosity change of the powder generated when linseed oil is added to natural graphite at a constant rate and converting it, and can be measured using an oil absorption meter (ASAHI SOUKEN, S-500).

The oil absorption amount of natural graphite in the above range can be more easily obtained through a high-density spheronization process and an oxidation treatment process for natural graphite in the manufacturing method as described later.

In addition, the natural graphite according to the present invention may have a BET specific surface area of 5.0 m²/g or more, and more specifically 5.5 m²/g, 6.0 m²/g, 6.3 m²/g, 6.7 m²/g, or 6.85 m²/g or more. As the specific surface area of natural graphite satisfies the above range, reactivity with lithium is improved, and thus the lifespan characteristics of the battery can be improved. In the present specification, the specific surface area can be measured for the active material powder using the BET method (Surface area and Porosity analyzer) (Micromeritics, ASAP2020).

In addition, the negative electrode active material may not include a coating layer disposed on the natural graphite. Conventionally, in order to further improve electrochemical properties including lifespan characteristics of natural graphite, a coating layer using an amorphous carbon material or the like has been formed on natural graphite. However, the negative electrode active material according to the present invention can improve lifespan characteristics through an oxidation treatment process instead of a coating layer forming process. Accordingly, additional raw materials such as amorphous carbon materials for forming a coating layer are not required, and thus process costs can be reduced.

Meanwhile, the average particle diameter (D50) of the natural graphite may be 10 to 20 µm. If the average particle diameter (D50) of natural graphite is too small, reactivity with the electrolyte becomes too large, which may cause a problem of reduced lifespan performance. If the average particle diameter (D50) of natural graphite is too large, the diffusion rate of lithium ions is limited, which may cause a problem of reduced lifespan performance.

In the present specification, the average particle diameter (D50) may be defined as a particle diameter corresponding to 50% of the cumulative volume in the particle diameter distribution curve of particles. The average particle diameter (D50) can be measured using, for example, a laser diffraction method.

### 2. Method of Preparing Negative Electrode Active Material

As described above, various physical properties including the degree of sphericity of natural graphite and pellet density upon application of a predetermined pressure can be more easily obtained through the high-density spheronization process and the oxidation treatment process described below, which will be described in detail.

Another embodiment of the present invention provides a method of preparing a negative electrode active material for a lithium secondary battery, comprising: preparing a natural graphite powder; performing high-density spheronization on the natural graphite powder; and performing an oxidation treatment on the high-density spheronized natural graphite powder.

Hereinafter, the method of preparing a negative electrode active material for a lithium secondary battery according to another embodiment of the present invention will be described in detail step by step.

First, natural graphite powder is prepared.

At this time, the prepared natural graphite may be one in which natural graphite raw material powder is primarily spheronized.

The primary spheronization may be performing spheronization by a general method of spheronizing plate-shaped natural graphite raw material powder in order to use a spheronized graphite material when manufacturing a negative electrode active material.

Next, the natural graphite powder is subjected to high-density spheronization.

Through the high-density spheronization, the degree of sphericity and the degree of orientation of natural graphite can be improved.

The high-density spheronization can be performed by a mechanical spheronization method.

The mechanical spheronization method may be performed through one or more methods selected from the group consisting of Air Classifying milling, Spheronizing milling, Grinding milling, mechanofusion milling, planetary milling, Hybridization milling, shape milling, and high speed milling.

The high-density spheronization may be performed at a rotation speed of 500 to 6000 rpm, and more specifically, 700 to 4000 rpm or 800 to 2000 rpm. If the rotation speed during high-density spheronization is too slow, the degree of sphericity and the orientation peak intensity ratio (I(110)/I(004)) of natural graphite may be obtained too small. If the rotation speed during high-density spheronization is too fast, the degree of sphericity and the orientation peak intensity ratio (I(110)/I(004)) of natural graphite may be obtained large, but natural graphite may be destroyed due to excessive processing.

The high-density spheronization may be performed for 5 to 40 minutes, and more specifically for 15 to 35 minutes or 20 to 30 minutes. If the high-density spheronization time is too short, the degree of sphericity and the orientation peak intensity ratio (I(110)/I(004)) of natural graphite may be obtained too small. If the high-density spheronization time is too long, the degree of sphericity and the orientation peak intensity ratio (I(110)/I(004)) of natural graphite may be obtained large, but natural graphite may be destroyed due to excessive processing.

Next, the high-density spheronized natural graphite powder is subjected to oxidation treatment.

Through the oxidation treatment, damage to the surface structure of natural graphite caused by mechanical milling in the high-density spheronization process can be recovered, thereby improving structural stability. More specifically, by increasing the softness of natural graphite, the pellet density upon application of a pressure of 800 kgf/cm² to natural graphite can be improved, the degree of orientation of natural graphite can be further improved, and the average Raman peak intensity ratio can be reduced through surface structure stabilization. In addition, the BET specific surface area of natural graphite can be made larger.

The oxidation treatment may be performed at a temperature of 500 to 700°C, and more specifically at a temperature of 550 to 650°C. If the oxidation treatment temperature is too low, the oxidation treatment does not proceed smoothly, and the effect of stabilizing the surface structure of natural graphite becomes insignificant, so that the pellet density upon application of a pressure of 800 kgf/cm² to natural graphite may be obtained too small, and the effect of improving the degree of orientation and reducing the average Raman peak intensity ratio may be insignificant. If the oxidation treatment temperature is too high, the effect of improving the degree of orientation and reducing the average Raman peak intensity ratio may be large, but due to excessive oxidation of natural graphite, the pellet density upon application of a pressure of 800 kgf/cm² may be obtained too large, and there may be a problem that natural graphite is lost during the oxidation process.

The oxidation treatment may be performed for 1 to 5 hours, and more specifically for 2 to 4 hours. If the oxidation treatment time is too short, the oxidation treatment does not proceed smoothly, and the effect of stabilizing the surface structure of natural graphite becomes insignificant, so that the pellet density upon application of a pressure of 800 kgf/cm² to natural graphite may be obtained too small, and the effect of improving the degree of orientation and reducing the average Raman peak intensity ratio may be insignificant. If the oxidation treatment time is too long, the effect of improving the degree of orientation and reducing the average Raman peak intensity ratio may be large, but due to excessive oxidation of natural graphite, the pellet density upon application of a pressure of 800 kgf/cm² may be obtained too large, and there may be a problem that natural graphite is lost during the oxidation process.

The oxidation treatment may be performed in an air or oxygen (O₂) atmosphere.

### 3. Negative Electrode and Lithium Secondary Battery

Another embodiment of the present invention provides a negative electrode for a lithium secondary battery comprising the aforementioned negative electrode active material.

More specifically, the negative electrode for a lithium secondary battery according to another embodiment of the present invention may include a negative electrode current collector; and a negative electrode active material layer positioned on the negative electrode current collector and including the aforementioned negative electrode active material for a lithium secondary battery.

The negative electrode current collector is not particularly limited as long as it has high conductivity without causing chemical changes in the battery. For example, copper, stainless steel, aluminum, nickel, titanium, calcined carbon, copper or stainless steel surface-treated with carbon, nickel, titanium, silver, etc., aluminum-cadmium alloy, and the like may be used. In addition, the negative electrode current collector may typically have a thickness of 3 to 500 µm, and similarly to the positive electrode current collector, fine irregularities may be formed on the surface of the current collector to enhance the binding force of the negative electrode active material. For example, it may be used in various forms such as films, sheets, foils, nets, porous bodies, foams, and non-woven fabrics.

The negative electrode active material layer may optionally include a binder and/or a conductive material together with the negative electrode active material.

The binder serves to improve adhesion between negative electrode active material particles and adhesion between the negative electrode active material and the negative electrode current collector. Specific examples include polyvinylidene fluoride (PVDF), vinylidene fluoridehexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene butadiene rubber (SBR), fluororubber, or various copolymers thereof, and one kind alone or a mixture of two or more kinds thereof may be used. The binder may be included in an amount of 1 to 30% by weight based on the total weight of the negative electrode active material layer.

The conductive material is used to impart conductivity to the electrode, and can be used without particular limitation as long as it has electron conductivity without causing chemical changes in the battery to be configured. Specific examples include graphite such as natural graphite or artificial graphite; carbon-based materials such as carbon black, acetylene black, Ketjen black, channel black, furnace black, lamp black, thermal black, and carbon fiber; metal powders or metal fibers such as copper, nickel, and silver; conductive whiskers such as zinc oxide and potassium titanate; conductive metal oxides such as titanium oxide; or conductive polymers such as polyphenylene derivatives, and one kind alone or a mixture of two or more kinds thereof may be used. The conductive material may be typically included in an amount of 1 to 30% by weight based on the total weight of the negative electrode active material layer.

The negative electrode for a lithium secondary battery according to one embodiment of the present invention can be manufactured according to a conventional negative electrode manufacturing method, except for using the aforementioned negative electrode active material.

Specifically, it can be manufactured by applying a composition for forming a negative electrode active material layer containing the aforementioned negative electrode active material and optionally a binder, a conductive material, and a solvent onto a negative electrode current collector, followed by rolling and drying. At this time, the types and contents of the negative electrode active material, binder, and conductive material are as described above.

The solvent may be a solvent generally used in the art, and may include dimethyl sulfoxide (DMSO), isopropyl alcohol, N-methylpyrrolidone (NMP), acetone, water, etc., and one kind alone or a mixture of two or more kinds thereof may be used. The amount of the solvent used is sufficient if it can dissolve or disperse the negative electrode active material, conductive material, and binder in consideration of the coating thickness of the slurry and the manufacturing yield, and has a viscosity capable of exhibiting excellent thickness uniformity during subsequent coating for manufacturing the negative electrode.

Alternatively, the negative electrode may be manufactured by casting the composition for forming the negative electrode active material layer on a separate support, and then laminating a film obtained by peeling from the support onto the negative electrode current collector.

Another embodiment of the present invention provides a lithium secondary battery comprising the negative electrode.

The lithium secondary battery according to another embodiment of the present invention may more specifically include a positive electrode, a negative electrode positioned to face the positive electrode, a separator interposed between the positive electrode and the negative electrode, and an electrolyte.

The negative electrode is as described above.

In addition, the lithium secondary battery may optionally further include a battery container for accommodating an electrode assembly of the positive electrode, the negative electrode, and the separator, and a sealing member for sealing the battery container.

The positive electrode may include a positive electrode current collector and a positive electrode active material layer disposed on the positive electrode current collector, and the positive electrode active material layer may include a positive electrode active material.

The positive electrode current collector is not particularly limited as long as it has conductivity without causing chemical changes in the battery. For example, stainless steel, aluminum, nickel, titanium, calcined carbon, or aluminum or stainless steel surface-treated with carbon, nickel, titanium, silver, etc. may be used. In addition, the positive electrode current collector may typically have a thickness of 3 to 500 µm, and fine irregularities may be formed on the surface of the positive electrode current collector to increase the adhesion of the positive electrode active material. For example, it may be used in various forms such as films, sheets, foils, nets, porous bodies, foams, and non-woven fabrics.

As the positive electrode active material, a compound capable of reversibly intercalating and deintercalating lithium (lithiated intercalation compound) may be used. Specifically, one or more kinds of composite oxides of a metal selected from cobalt, manganese, nickel, and combinations thereof and lithium may be used, and specific examples thereof include compounds represented by any one of the following chemical formulas:
LiₐA_{1-b}B_{b}D₂ (wherein 0.90 ≤ a ≤ 1.8 and 0 ≤ b ≤ 0.5); LiₐE_{1-b}BbO₂₋cD_{c} (wherein 0.90 ≤ a ≤ 1.8, 0 ≤ b ≤ 0.5, 0 ≤ c ≤ 0.05); LiE_{2-b}BbO₄₋cD_{c} (wherein 0 ≤ b ≤ 0.5, 0 ≤ c ≤ 0.05); LiₐNi_{1-b-c}Co_{b}B_{c}D_{α} (wherein 0.90 ≤ a ≤ 1.8, 0 ≤ b ≤ 0.5, 0 ≤ c ≤ 0.05, 0 < α ≤ 2); LiₐNi_{1-b c}Co_{b}B_{c}O_{2-α}T_{α} (wherein 0.90 ≤ a ≤ 1.8, 0 ≤ b ≤ 0.5, 0 ≤ c ≤ 0.05, 0 < α < 2); LiₐNi_{1-b-c}Co_{b}B_{c}O_{2-α}T₂ (wherein 0.90 ≤ a ≤ 1.8, 0 ≤ b ≤ 0.5, 0 ≤ c ≤ 0.05, 0 < α < 2); LiₐNi_{1-b-c}Mn_{b}B_{c}D_{α} (wherein 0.90 ≤ a ≤ 1.8, 0 ≤ b ≤ 0.5, 0 ≤ c ≤ 0.05, 0 < α ≤ 2); LiₐNi_{1-b-c}Mn_{b}B_{c}O_{2-α}T_{α} (wherein 0.90 ≤ a ≤ 1.8, 0 ≤ b ≤ 0.5, 0 ≤ c ≤ 0.05, 0 < α < 2); LiₐNi_{1-b-c}Mn_{b}B_{c}O_{2-α}T₂ (wherein 0.90 ≤ a ≤ 1.8, 0 ≤ b ≤ 0.5, 0 ≤ c ≤ 0.05, 0 < a < 2); LiₐNi_{b}E_{c}G_{d}O₂ (wherein 0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (wherein 0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (wherein 0.90 ≤ a ≤ 1.8, 0.001 ≤ b ≤ 0.1); LiₐCoG_{b}O₂ (wherein 0.90 ≤ a ≤ 1.8, 0.001 ≤ b ≤ 0.1); LiₐMnG_{b}O₂ (wherein 0.90 ≤ a ≤ 1.8, 0.001 ≤ b ≤ 0.1); LiₐMn₂G_{b}O₄ (wherein 0.90 ≤ a ≤ 1.8, 0.001 ≤ b ≤ 0.1); QO₂; QS₂; LiQS₂; V₂O₅; LiV₂O₅; LiIO₂; LiNiVO₄; Li(_{3-f})J₂(PO₄)₃ (0 ≤ f ≤ 2); Li(_{3-f})Fe₂(PO₄)₃ (0 ≤ f ≤ 2); and LiFePO₄.

In the above formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; T is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J may be V, Cr, Mn, Co, Ni, Cu, or a combination thereof.

Of course, those having a coating layer on the surface of the compound or a mixture of the compound and a compound having a coating layer may be used.

The coating layer may include at least one coating element compound selected from the group consisting of an oxide of a coating element, a hydroxide of a coating element, an oxyhydroxide of a coating element, an oxycarbonate of a coating element, and a hydroxycarbonate of a coating element. The compounds constituting these coating layers may be amorphous or crystalline. As the coating element included in the coating layer, Mg, Al, Co, K, Na, Ca, Si, Ti, V, Sn, Ge, Ga, B, As, Zr, or a mixture thereof may be used. The coating layer forming process may use any coating method as long as it can coat the compound using these elements without adversely affecting the physical properties of the positive electrode active material (e.g., spray coating, dipping method, etc.), and since this is well understood by those engaged in the art, a detailed description thereof will be omitted.

The positive electrode active material layer may further include a binder and/or a conductive material together with the aforementioned positive electrode active material.

The binder serves to improve adhesion between positive electrode active material particles and adhesion between the positive electrode active material and the positive electrode current collector. Specific examples include polyvinylidene fluoride (PVDF), vinylidene fluoridehexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene butadiene rubber (SBR), fluororubber, or various copolymers thereof, and one kind alone or a mixture of two or more kinds thereof may be used, but is not limited thereto. The binder may be included in an amount of 1 to 30% by weight based on the total weight of the positive electrode active material layer.

The conductive material is used to impart conductivity to the electrode, and can be used without particular limitation as long as it has electron conductivity without causing chemical changes in the battery to be configured. Specific examples include graphite such as natural graphite or artificial graphite; carbon-based materials such as carbon black, acetylene black, Ketjen black, channel black, furnace black, lamp black, thermal black, and carbon fiber; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and one kind alone or a mixture of two or more kinds thereof may be used, but is not limited thereto. The conductive material may be typically included in an amount of 1 to 30% by weight based on the total weight of the positive electrode active material layer.

The positive electrode can be manufactured according to a conventional positive electrode manufacturing method.

Specifically, the positive electrode can be manufactured by applying a composition for forming a positive electrode active material layer containing a positive electrode active material and optionally a binder, a conductive material, or a solvent onto a positive electrode current collector, followed by drying and rolling. At this time, the types and contents of the positive electrode active material, binder, and conductive material are as described above.

The solvent may be a solvent generally used in the art, and may include dimethyl sulfoxide (DMSO), isopropyl alcohol, N-methylpyrrolidone (NMP), acetone, water, etc., and one kind alone or a mixture of two or more kinds thereof may be used. The amount of the solvent used is sufficient if it can dissolve or disperse the positive electrode active material, conductive material, and binder in consideration of the coating thickness of the slurry and the manufacturing yield, and has a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling from the support onto the positive electrode current collector.

The separator separates the positive electrode and the negative electrode and provides a passage for lithium ions to move. It can be used without particular limitation as long as it is normally used as a separator in a lithium secondary battery. In particular, it is preferable that it has low resistance to ion movement of the electrolyte and excellent electrolyte impregnation ability. Specifically, a porous polymer film, for example, a porous polymer film made of a polyolefinbased polymer such as ethylene homopolymer, propylene homopolymer, ethylene/butene copolymer, ethylene/hexene copolymer, and ethylene/methacrylate copolymer, or a laminated structure of two or more layers thereof may be used. In addition, conventional porous nonwoven fabrics, for example, nonwoven fabrics made of high melting point glass fibers, polyethylene terephthalate fibers, etc., may be used. In addition, a coated separator containing a ceramic component or a polymer material may be used to secure heat resistance or mechanical strength, and may be optionally used in a single-layer or multi-layer structure.

The electrolyte may include an organic liquid electrolyte, an inorganic liquid electrolyte, a solid polymer electrolyte, a gel-type polymer electrolyte, a solid inorganic electrolyte, a molten inorganic electrolyte, etc., which can be used in manufacturing a lithium secondary battery, but is not limited thereto.

Specifically, the organic liquid electrolyte may include an organic solvent and a lithium salt.

The organic solvent may be used without particular limitation as long as it can serve as a medium through which ions involved in the electrochemical reaction of the battery can move. Specifically, as the organic solvent, ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (R is a C2 to C20 linear, branched or cyclic hydrocarbon group, and may contain a double bond aromatic ring or ether bond); amides such as dimethylformamide; dioxolanes such as 1,3-dioxolane; or sulfolanes may be used. Among these, carbonate-based solvents are preferable, and a mixture of cyclic carbonates (e.g., ethylene carbonate or propylene carbonate, etc.) having high ionic conductivity and high dielectric constant capable of increasing the charge/discharge performance of the battery and linear carbonate-based compounds having low viscosity (e.g., ethyl methyl carbonate, dimethyl carbonate or diethyl carbonate, etc.) is more preferable. In this case, when the cyclic carbonate and the chain carbonate are mixed in a volume ratio of about 1:1 to about 1:9, the performance of the electrolyte may be excellent.

The lithium salt can be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂, etc. may be used. The concentration of the lithium salt is preferably used within the range of 0.1 to 2.0 M. When the concentration of the lithium salt is included in the above range, the electrolyte has appropriate conductivity and viscosity, so that excellent electrolyte performance can be exhibited and lithium ions can move effectively.

In addition to the electrolyte components, the electrolyte may further include one or more additives such as haloalkylene carbonate-based compounds such as difluoroethylene carbonate, pyridine, triethylphosphite, triethanolamine, cyclic ether, ethylene diamine, n-glyme, hexamethylphosphoric triamide, nitrobenzene derivatives, sulfur, quinone imine dyes, N-substituted oxazolidinones, N,N-substituted imidazolidines, ethylene glycol dialkyl ether, ammonium salts, pyrrole, 2-methoxyethanol, or aluminum trichloride for the purpose of improving lifespan characteristics of the battery, suppressing battery capacity reduction, improving discharge capacity of the battery, etc. At this time, the additive may be included in an amount of 0.1 to 5% by weight based on the total weight of the electrolyte.

Hereinafter, embodiments of the present invention will be described in more detail through examples. However, the following examples are merely preferred embodiments of the present invention, and the present invention is not limited by the following examples.

### Example 1 (1) Preparation of Negative Electrode Active Material

**(Preparation of Natural Graphite Powder)** Primary spheronized natural graphite powder having an average particle diameter (D50) of 16 µm was prepared.

**(High-Density Spheronization)** Thereafter, the natural graphite powder was subjected to high-density spheronization treatment at 1000 rpm for 15 minutes in a spheronizer, and fine powder and coarse particles were removed through air classification and sieving classification.

**(Oxidation Treatment)** Thereafter, the high-density spheronized natural graphite powder was subjected to oxidation treatment in a continuous rotary kiln furnace at 600°C for 3 hours in an air atmosphere.

### (2) Preparation of Negative Electrode

The prepared negative electrode active material, a conductive material, styrene butadiene rubber (SBR) as a binder, and carboxymethyl cellulose (CMC) as a thickener were mixed in a mass ratio of 96.6:1:1.3:1.1, and then dispersed in ion-removed distilled water to prepare a negative electrode active material layer composition. The composition was applied to a Cu-foil current collector, dried and rolled to prepare a negative electrode having an electrode density of 1.50 ± 0.05, 1.70 ± 0.05 g/cm³.

### (3) Preparation of Lithium Secondary Battery

A coin-type 2032 half-cell was manufactured using the negative electrode as a working electrode and lithium metal as a counter electrode. At this time, a separator made of a porous polypropylene film was inserted between the working electrode and the counter electrode, and as an electrolyte, a solution in which 1M concentration of LiPF₆ was dissolved in a mixed solution of diethyl carbonate (DEC) and ethylene carbonate (EC) at a mixing volume ratio of 7:3 was used.

### Comparative Example 1

A negative electrode active material and a lithium secondary battery were prepared in the same manner as in Example 1, except that the oxidation treatment step was not performed.

### Comparative Example 2

A negative electrode active material and a lithium secondary battery were prepared in the same manner as in Example 1, except that the high-density spheronization step was not performed.

### Comparative Example 3

A negative electrode active material and a lithium secondary battery were prepared in the same manner as in Example 1, except that the high-density spheronization step and the oxidation treatment step were not performed.

### Comparative Example 4

**(Preparation of Natural Graphite Powder)** Primary spheronized natural graphite powder having an average particle diameter (D50) of 16 µm was prepared.

**(Coating)** The prepared natural graphite powder was used as a base material and mixed with petroleum pitch in a weight ratio of 100:8, and then mechanically mixed at 1500 rpm for 10 minutes in a high-speed mixer to form a uniform mixture. The mixture was put into a container and heat-treated at 1200°C for 5 hours in a nitrogen atmosphere to prepare natural graphite having an amorphous carbon coating layer formed thereon.

Table 1 below summarizes the negative electrode active material manufacturing processes of the Examples and Comparative Examples.

**[Table 1]**

| | High-Density Spheronization | Oxidation Treatment | Coating |
|---|---|---|---|
| Example 1 | ○ | ○ | - |
| Comparative Example 1 | ○ | - | - |
| Comparative Example 2 | - | ○ | - |
| Comparative Example 3 | - | - | - |
| Comparative Example 4 | - | - | ○ |

### Experimental Example 1: Evaluation of SEM Images of Negative Electrode Active Material

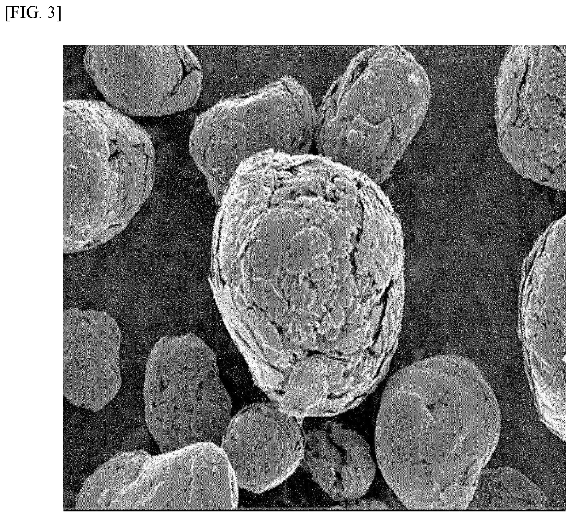

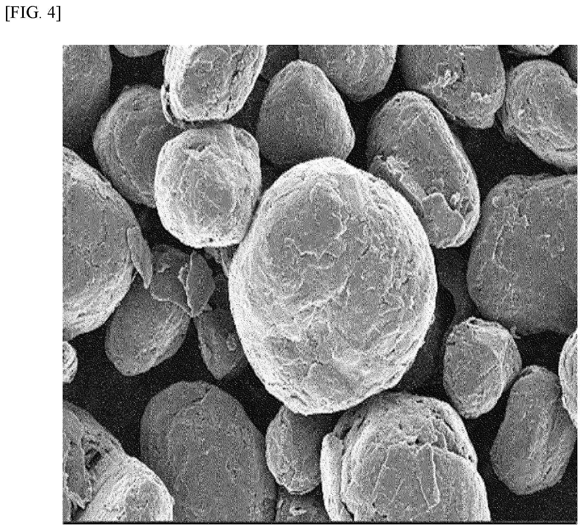

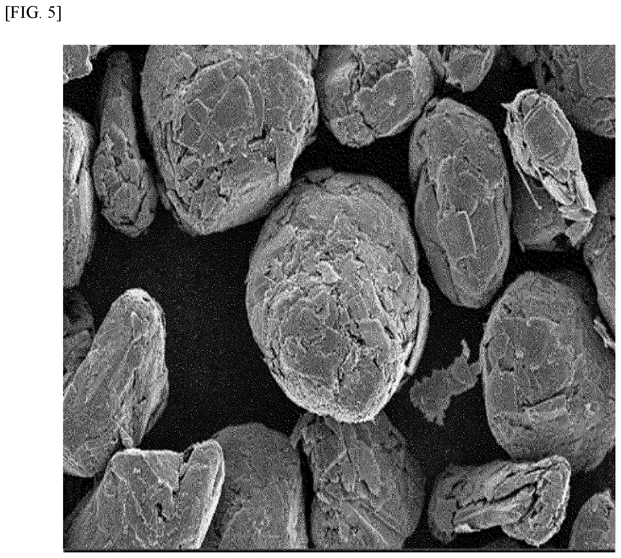

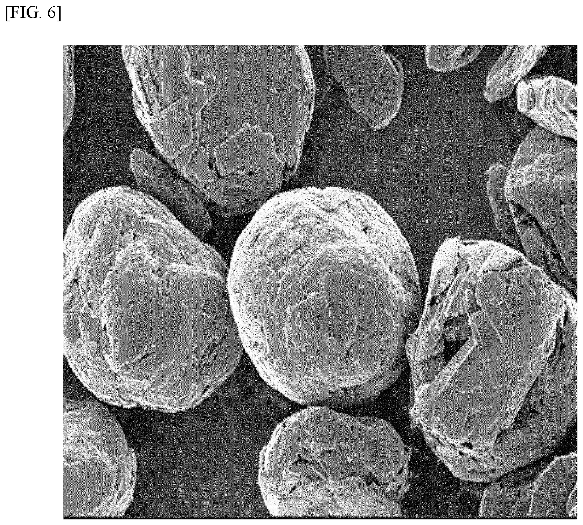

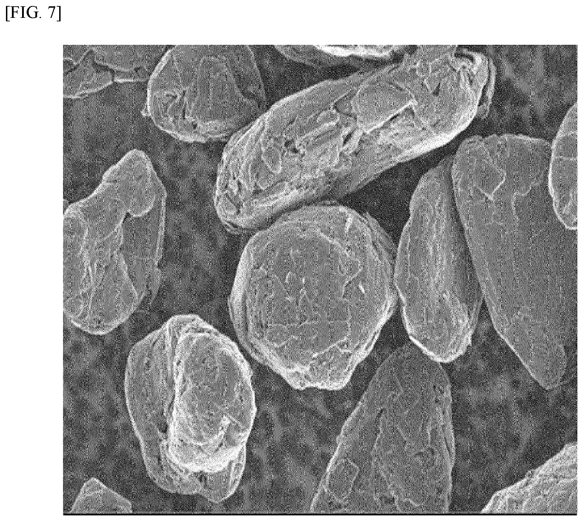

SEM (Scanning Electron Microscope) images were observed for the negative electrode active materials of Example 1 and Comparative Examples 1 to 4, and these are shown in FIGS. 3 to 7 in order. Referring to FIGS. 3 to 7, natural graphite subjected to oxidation treatment exhibited a somewhat rough surface shape, whereas natural graphite not subjected to oxidation treatment was confirmed to have a relatively smooth surface.

### Experimental Example 2: Evaluation of Physical Properties of Negative Electrode Active Material

### (1) Evaluation of Particle Diameter (D10, D50, D90, Dmax)

For the active material powder, particle diameters (D10, D50, D90, Dmax) were derived using a laser diffraction method. Particle diameter (Dmax), particle diameter (D90), particle diameter (D10), and particle diameter (D50) can be defined as particle diameters corresponding to 100%, 90%, 10%, and 50% of the cumulative volume in the particle diameter distribution curve of particles, respectively.

### (2) Evaluation of Tap Density

Based on ASTM B527, 15g of active material powder was put into a 50mL container and tapped at 3000 cycles @ 284 cycles/min to measure the packing density.

### (3) Evaluation of Specific Surface Area

For the active material powder, the specific surface area was measured using the BET method (Surface area and Porosity analyzer) (Micromeritics, ASAP2020).

### (4) Evaluation of Sphericity

The sphericity was evaluated by dividing the circumference of a circle having the same area as the particle projection shape by the actual circumference of the particle projection shape through a flow-type particle analysis device. At this time, it was measured using an analyzer (Fluid Imaging Technologies, Flowcam 8100) and analysis S/W (visual spreadsheet) for obtaining optical images.

### (5) Evaluation of Pellet Density According to Applied Pressure

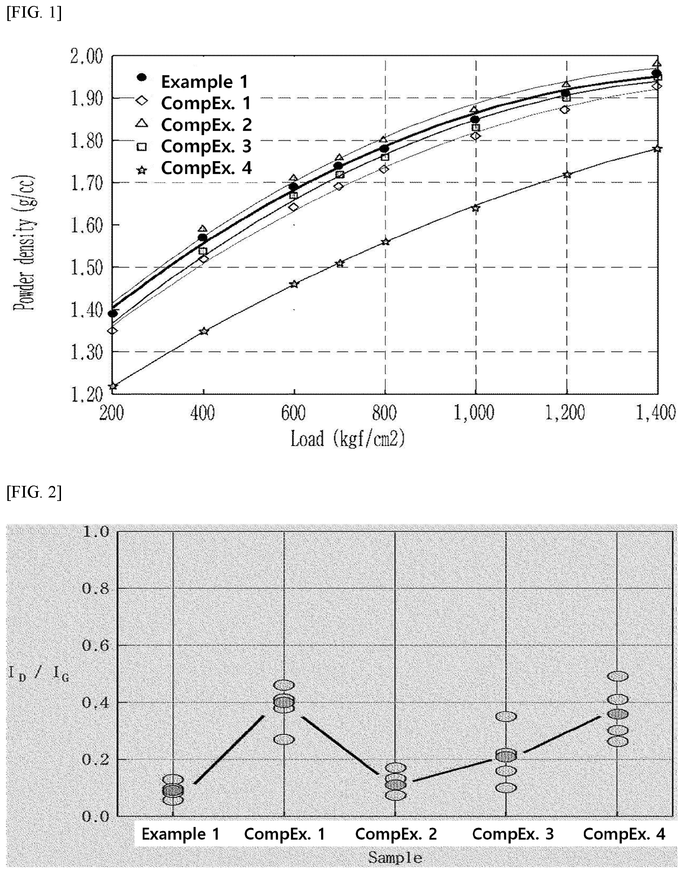

For the active material powder, the pellet density of the active material powder according to the applied pressure was measured. At this time, the pellet density of the active material powder when a pressure of 800 kgf/cm² was applied is shown in Table 3 below. In addition, a graph showing the pellet density of the active material powder according to the applied pressure is shown in FIG. 1.

### (6) Evaluation of Orientation Degree

It was calculated as the peak intensity ratio (I(110)/I(004)) of the XRD spectrum attributable to the (110) plane and the (004) plane of the graphite crystal in the XRD pattern obtained from X-ray diffraction measurement. More specifically, the XRD measurement conditions are as follows.
- Target: Cu (Kα-ray) graphite monochromator
- Slit: Divergence slit = 1 degree, Receiving slit = 0.1 mm, Scattering slit = 1 degree
- Measurement zone and step angle/measurement time:
- (110) plane: 76.5 degrees < 20 < 78.5 degrees, 0.1 degree / 4.2 seconds
- (004) plane: 53.5 degrees < 2θ < 56.0 degrees, 0.1 degree / 4.2 seconds, where 20 represents the diffraction angle.

### (6) Evaluation of Average Raman Peak Intensity Ratio (I_{D}/I_{G})

The Raman peak intensity ratio (I_{D}/I_{G}) was measured as the average value of 5 measurements of the ratio of the maximum peak intensity of the D band at 1360 ± 50 cm⁻¹ to the maximum peak intensity of the G band at 1580 ± 50 cm⁻¹ obtained by Raman spectroscopy. A graph showing this is shown in FIG. 2.

**[Table 2]**

| Category | D10 (um) | D50 (um) | D90 (um) | Dmax (um) | Tap Density (g/cc) | Specific Surface Area (m²/g) |
|---|---|---|---|---|---|---|
| Example 1 | 9.9 | 14.9 | 21.9 | 32 | 0.85 | 6.9 |
| Comparative Example 1 | 9.9 | 14.9 | 22 | 32 | 1.01 | 6.8 |
| Comparative Example 2 | 10.6 | 15.9 | 23.6 | 36 | 0.81 | 6.4 |
| Comparative Example 3 | 10.7 | 16 | 23.7 | 36 | 0.94 | 6 |
| Comparative Example 4 | 10.9 | 16.3 | 24 | 36 | 1.06 | 2.7 |

**[Table 3]**

| Category | Sphericity | 800kgf/cm² Pellet Density (g/cc) | Oil Absorption (mL/100g) | Orientation Degree (I110/I004) | Raman Peak Intensity Ratio (ID/IG) |
|---|---|---|---|---|---|
| Example 1 | 0.92 | 1.78 | 44.4 | 0.552 | 0.09 |
| Comparative Example 1 | 0.92 | 1.73 | 39.1 | 0.509 | 0.38 |
| Comparative Example 2 | 0.9 | 1.80 | 50.0 | 0.326 | 0.11 |
| Comparative Example 3 | 0.9 | 1.76 | 47.8 | 0.304 | 0.21 |
| Comparative Example 4 | 0.9 | 1.56 | 38.0 | 0.265 | 0.36 |

Referring to Tables 2 and 3, in the case of Example 1 in which both the high-density spheronization process and the oxidation treatment process were properly performed on the natural graphite powder, it was confirmed that various physical properties including sphericity and pellet density upon application of a pressure of 800 kgf/cm² were appropriately obtained within the range according to the present invention.

On the other hand, in the case of Comparative Example 1 in which the oxidation treatment process was not performed, the degree of sphericity showed a level similar to that of the Example, but it was confirmed that the pellet density upon application of a pressure of 800 kgf/cm², the degree of orientation, the Raman peak intensity ratio, and the oil absorption amount deviated from the range according to the present invention.

In addition, in the case of Comparative Example 2 in which the high-density spheronization process was not performed, the degree of sphericity was low, and it was confirmed that the pellet density upon application of a pressure of 800 kgf/cm², the degree of orientation, the Raman peak intensity ratio, and the oil absorption amount deviated from the range according to the present invention.

In addition, in the case of Comparative Example 3 in which the high-density spheronization and oxidation treatment processes were not performed, the degree of sphericity was low, and it was confirmed that the pellet density upon application of a pressure of 800 kgf/cm², the degree of orientation, the Raman peak intensity ratio, and the oil absorption amount deviated from the range according to the present invention.

In addition, in the case of Comparative Example 4 in which the high-density spheronization and oxidation treatment processes were not performed and the coating process was performed, it was confirmed that the pellet density upon application of a pressure of 800 kgf/cm², the degree of orientation, the Raman peak intensity ratio, and the oil absorption amount deviated from the range according to the present invention.

### Experimental Example 3: Evaluation of Electrochemical Properties of Lithium Secondary Battery

### (1) Evaluation of Initial Discharge Capacity and Initial Efficiency

After fabricating a lithium secondary battery half-cell, it was aged at 25°C for 12 hours, and then a charge/discharge test was performed at 25°C. For initial capacity evaluation, 200 mAh/g was set as a reference capacity, and charging was performed at a constant current of 0.1 C to 4.25 V, then switched to constant voltage, and charging was performed until the termination current reached 0.05 C. After charging, after having a rest time of 10 minutes, discharging was performed until reaching 2.5 V at a constant current of 0.1 C with 200 mAh/g as a reference capacity.

### (2) Evaluation of Lifespan Characteristics (50 cycles)

The manufactured lithium secondary battery was charged at 0.1 C to 4.2 V/0.005 C under constant current/constant voltage (CC/CV) conditions at 25°C, and then discharged at 0.1 C to 2.5 V under constant current (CC) conditions to complete the formation process. Then, charging was performed to 4.2 V/0.005 C under constant current/constant voltage (CC/CV) conditions at 3 Crate, and then discharging was performed at 0.5 C to 2.5 V under constant current (CC) conditions, and the discharge capacity retention rate of the cell for 50 cycles was measured. The measurement was performed at 25°C.

**[Table 4]**

| Category | Initial Discharge Capacity (mAh/g) | Initial Efficiency (%) | Lifespan Characteristics (50Cycle, %) |
|---|---|---|---|
| Example 1 | 368.1 | 92.0 | 76.2 |
| Comparative Example 1 | 367.2 | 92.2 | 74.5 |
| Comparative Example 2 | 368.8 | 91.7 | 75.1 |
| Comparative Example 3 | 367.9 | 92.0 | 73.7 |
| Comparative Example 4 | 362.3 | 93.2 | 75.4 |

Referring to Table 4, in the case of the Example in which various physical properties including sphericity, pellet density upon application of a pressure of 800 kgf/cm², etc., satisfied the range according to the present invention, it was confirmed that the lifespan characteristics were excellent.

On the other hand, in the case of Comparative Examples 1 to 4 in which sphericity or pellet density upon application of a pressure of 800 kgf/cm² and other physical properties deviated from the range according to the present invention, it was confirmed that the lifespan characteristics were inferior to those of the Example.

Although the preferred embodiments of the present invention have been described above, the present invention is not limited thereto, and it is natural that various modifications can be made and practiced within the scope of the claims, the detailed description of the invention, and the accompanying drawings, and these also fall within the scope of the present invention.

Therefore, the substantial scope of the present invention will be defined by the appended claims and equivalents thereof.

## Claims

1. A negative electrode active material for a lithium secondary battery comprising natural graphite, wherein a degree of sphericity of the natural graphite is 0.91 or more, and the natural graphite has a pellet density of 1.70 g/cc or more when a pressure of 800 kgf/cm² is applied.

2. The negative electrode active material for a lithium secondary battery of claim 1, wherein the natural graphite has an orientation peak intensity ratio (I(110)/I(004)) of 0.51 or more in XRD pattern analysis.

3. The negative electrode active material for a lithium secondary battery of claim 1, wherein the natural graphite has an average Raman peak intensity ratio (I_{D}/I_{G}) of 0.30 or less.

4. The negative electrode active material for a lithium secondary battery of claim 1, wherein the natural graphite has an oil absorption amount of 42 to 46 mL/100g.

5. The negative electrode active material for a lithium secondary battery of claim 1, wherein the natural graphite has a BET specific surface area of 5.0 m²/g or more.

6. The negative electrode active material for a lithium secondary battery of claim 1, wherein the natural graphite is oxidation-treated.

7. The negative electrode active material for a lithium secondary battery of claim 1, wherein the negative electrode active material does not include a coating layer disposed on the natural graphite.

8. The negative electrode active material for a lithium secondary battery of claim 1, wherein an average particle diameter (D50) of the natural graphite is 10 to 20 µm.

9. A method of preparing a negative electrode active material for a lithium secondary battery, comprising:
preparing a natural graphite powder;
performing high-density spheronization on the natural graphite powder; and
performing an oxidation treatment on the high-density spheronized natural graphite powder.

10. The method of preparing a negative electrode active material for a lithium secondary battery of claim 9, wherein the oxidation treatment is performed at a temperature of 500 to 700°C.

11. The method of preparing a negative electrode active material for a lithium secondary battery of claim 9, wherein the oxidation treatment is performed for 1 to 5 hours.

12. The method of preparing a negative electrode active material for a lithium secondary battery of claim 9, wherein the oxidation treatment is performed in an air or oxygen (O₂) atmosphere.

13. A negative electrode for a lithium secondary battery comprising the negative electrode active material of any one of claims 1 to 8.

14. A lithium secondary battery comprising the negative electrode for a lithium secondary battery of claim 13.
